# EUROPEAN PATENT APPLICATION

(11) **EP 4 596 226 A2**
(43) Date of publication of application: **06.08.2025**
(21) Application number: 25184599.6
(22) Date of filing: 29.06.2021
(51) Int. Cl.: B29L 31/00

(54) **METHOD OF HEATING A PREFORM SUITABLE FOR BLOW MOLDING**

(62) Divisional of application: 21752739.9
(71) Applicant: Discma AG, 6331 Hünenberg (CH)
(72) Inventor: SIERADZKI, Richard, Frankfort, 60423 (US)
(74) Representative: Maidment, Marc

(57) **Abstract**

A method of optimizing a blow molding process includes the steps of providing a plurality of preforms (12), heating each preform (12), measuring the temperature of at least a portion of each preform (12) along its longitudinal axis (O) and around its circumference, determining whether each preform (12) is unacceptable for undergoing the blow molding process prior to transferring each preform (12) to a blow molding station, and taking remedial action with respect to each preform (12) determined to be unacceptable for undergoing the blow molding process. The determination of whether each preform (12) is unacceptable for undergoing the blow molding process is based upon analysis of one or both of: data collected during an inspection of each preform (12) occurring before the heating of each preform (12), and/or data collected during the measuring of the temperature of at least the portion of each preform (12).

## Description

### FIELD OF THE INVENTION

The present technology relates to systems and processes for producing a plurality of preforms having a plurality of temperature profiles, including where such preforms can be subjected to blow molding processes.

### BACKGROUND OF THE INVENTION

This section provides background information related to the present disclosure which is not necessarily prior art.

Various products are distributed in plastic containers, such as containers formed from one or more polymers. Common polymers used to form containers include polyesters, such as polyethylene terephthalate (PET), high and low density polyethylenes (PE), polypropylenes (PP), and polycarbonates (PC), among others. Plastic containers can be made using various blow molding processes including injection blow molding, liquid or hydraulic blow molding, and extrusion blow molding, where such blow molding processes can employ a preform that is expanded by a fluid to form a resultant container.

Injection blow molding can be used to form certain plastic containers in one or more stages and can include use of a stretch rod. In a two-stage injection stretch blow molding process, a polymer can be first molded into a preform using an injection molding process. The preform can include the neck and finish of the container to be formed, which can include threading thereon, and a closed distal end. The preform can then be heated above the polymer glass transition temperature, optionally stretched longitudinally with a stretch rod, and blown using high-pressure gas (e.g., air) into a container conforming to a mold. As the preform is inflated, it elongates and stretches, taking on the shape of the mold cavity. The polymer solidifies upon contacting the cooler surface of the mold and the finished hollow container is subsequently ejected from the mold.

Liquid or hydraulic blow molding can form and fill a container in a single operation. A liquid product can be used to form and fill a polymeric preform within a mold into a resultant container, where the liquid product remains thereafter in the finished container. A heated preform, much like the preform used in injection blow molding, can be placed within the mold, optionally stretched, and rapidly filled using a liquid product instead of a gas to form a container therefrom. Combination of the forming and filling steps can therefore optimize packaging of a liquid product by eliminating the transport of empty containers and time demands related to subsequent filling operations.

Various types of preforms can be used in such blow molding processes. Certain embodiments of preforms include injection-molded, rotationally symmetric preforms that have an elongated, cylindrical, lateral body section, a rounded, closed bottom, and a neck section with an upper opening. Other preforms have be rotationally asymmetric with a varying thickness along an elongate axis to facilitate a material distribution that forms an asymmetric container. In either case, positioned proximate to the opening, there can be an outer threaded finish section, which can be delimited toward a bottom thereof by a collar or the like. The threaded finish section can be preserved during blow molding of the preform where the finish can form a thread for a screw cap of a finished beverage container, for example. The remaining portion of the preform, in contrast, can be deformed and stretched during the blow molding process. Preforms can be heated to predefined temperatures in order to enable blow molding in the desired manner. Heating can be performed by various means, including infrared radiation using an infrared oven, to effect defined and/or uniform temperature control of the preforms.

In particular, the polymeric material of the preform (e.g., PET) can be of such a nature that the polymer can strain harden as the polymer is stretched. Forming temperature during the blow molding process can therefore be a determinative factor in the resultant container. The strain hardening effect can be taken into consideration in the production of PET containers for the purpose of controlling and optimizing wall thickness distribution. Depending on the production process, it can be possible to apply heat via infrared radiation in such a way that the preforms are heated according to a temperature profile. In this manner, the warmer sections of the preform can be deformed with priority over other parts as long as is required for the stretching resistance resulting from strain hardening to become greater than the resistance of the adjacent cooler sections, for example. The temperature profile can be uniformly distributed around the circumference of the preforms and can vary process-dependently along the longitudinal axis of the preforms. In order to apply the desired temperature profile to the preforms, use a number of heating zones can be used, for instance up to nine or more zones. It is possible to control the plurality of different heating zones individually, whereby the selected setting is maintained constant over a longer period of operating the heating apparatus.

Preforms of different construction can require different heating regimens in preparation for blow molding into resultant containers. For example, preforms of different sizes, shapes, thicknesses, formed of or including different polymers or polymer combinations, layers, and the like can each have a predetermined temperature profile optimized for a particular blow molding process. Certain examples include different heating regimens for effecting different temperature profiles for PET preforms versus PP preforms. Other examples include different heating regimens for effecting the same temperature profile, but where the preforms have different characteristics that require different regimens to achieve the same temperature profile; e.g., preforms formed of the same material but having different thicknesses. Accordingly, various heating parameters can be tailored for particular preforms, including the number of heating zones, the temperature of certain heating zones, the exposure time to certain heating zones, and the like.

A blow molding system can often include a preform heating means in close proximity thereto, where heated preforms can be passed to a mold in short order and formed into resultant containers before a desired temperature profile of the preforms changes. A travel path of a preform through an infrared oven, for example, can be tailored to generate a predetermined temperature profile in a given preform. However, if a condition of the blow molding system and/or process is changed, it can be necessary to change the preform path or heating means to adapt to a new temperature profile for a given preform. Changes in blow molding conditions can include the use of another preform type, a change in the mold, changes in blow molding parameters, and the like. Accordingly, it can be difficult to adapt a blow molding system and/or process to changing conditions that require changes in preform temperature profiles while maintaining continuous or high throughput production of containers. Oftentimes, one or more settings may need to be changed, one or more new equilibriums reached, and one or more physical parameters may need to be adapted in the blow molding system in order to accommodate preforms having different characteristics.

Absent appropriate temperature control, a heated preform may have an improper material distribution and/or expansion during a blow molding operation and the resulting container may rupture (or "blowout") or otherwise fail an aesthetic inspection. For refined gas blow molding processes, it can be expected that from about 1500 to about 2500 containers per one million gas blow molded container will suffer from a blowout. The expected blowouts from a liquid blow molded container is roughly the same. In the instance of liquid blow molding, a blowout will result in more than escape of air and will result in an escape and possible waste of the liquid product to fill the container. When the blow molding liquid is water, a blowout may result in little more than wasted water and negligible down time to allow the blow molding equipment to dry. When the blow molding liquid is a petroleum product, medicine, or cosmetic, for example, a blowout can result in a significant of time due to cleaning procedures required to render the blow molding equipment once-again operational and can result in wasted and unusable product, each of which alone may create a significant economic impact on the blowing molding process and product cost but combined may render the liquid blow molding process economically unfeasible for packing the product. It would be desirable to develop a method of blow molding that would reduce the expected blowouts for a blow molding operation (liquid or gas) to about 25 blowouts per million containers formed.

In consideration of these issues, the present technology provides a method of determining an acceptable temperature profile of a preform prior to a blow molding operation to minimize blowouts, where the resulting blow molding operation can be maintained in a continuous or high throughput fashion.

### SUMMARY OF THE INVENTION

Concordant and congruous with the present invention, a method of determining an acceptable temperature profile of a preform prior to a blow molding operation to minimize blowouts has surprisingly been discovered.

In an embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; and optimizing the heating step based on a comparison of the measuring step to the inspecting step to ensure each preform has been heated to an acceptable temperature to ensure the heating step for subsequent preforms is optimized for blow molding to militate against blowouts thereof.

In another embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; comprising a step of compiling the measured temperatures of the at least a portion of each preform; converting the compiled measured temperatures into a three-dimensional thermal image representing the measured temperatures of the at least a portion of the preform; and optimizing the heating step based on a comparison of three-dimensional thermal image to the inspecting step to ensure each preform has been heated to an acceptable temperature to ensure the heating step for subsequent preforms is optimized for blow molding to militate against blowouts thereof.

In another embodiment of the invention, a method for heating a preform, the method comprises the steps of providing a plurality of preforms suitable for blow molding; inspecting each preform to identify at least a material from which the preform is formed; heating each preform; measuring the temperature of at least a portion of each preform along its longitudinal axis and around its circumference; comprising a step of compiling the measured temperatures of the at least a portion of each preform; converting the compiled measured temperatures into a three-dimensional thermal image representing the measured temperatures of the at least a portion of the preform; converting the three-dimensional thermal image into a two-dimensional thermal image representing the portion of the preform measured along its longitudinal axis and around its circumference; and optimizing the heating step based on a comparison of two-dimensional thermal image to the inspecting step to ensure each preform has been heated to an acceptable temperature to ensure the heating step for subsequent preforms is optimized for blow molding to militate against blowouts thereof.

### BRIEF DESCRIPTION OF THE DRAWINGS

The above, as well as other advantages of the present invention, will become readily apparent to those skilled in the art from the following detailed description of a preferred embodiment when considered in the light of the accompanying drawings in which:
Fig. 1 is a plan view schematically depicting an oven for the heat treatment and thermal imaging of preforms;
Fig. 2 is a sectional view of one of the heating means of Fig. 1 and including a preform heated thereby;
Fig. 3 is an exemplary three-dimensional thermal image of a heated preform and a corresponding two-dimensional thermal image derived therefrom;
Fig. 4 shows the images of Fig. 3 selectively dissected; and
Fig. 5 is a side-by-side comparison of the two-dimensional thermal image of Fig. 3 with a graphical representation of the thermal data used to generate the image.

### DETAILED DESCRIPTION OF EXEMPLARY EMBODIMENTS OF THE INVENTION

The following description of technology is merely exemplary in nature of the subject matter, manufacture and use of one or more inventions, and is not intended to limit the scope, application, or uses of any specific invention claimed in this application or in such other applications as can be filed claiming priority to this application, or patents issuing therefrom. Regarding methods disclosed, the order of the steps presented is exemplary in nature, and thus, the order of the steps can be different in various embodiments, including where certain steps can be simultaneously performed. "A" and "an" as used herein indicate "at least one" of the item is present; a plurality of such items can be present, when possible. Except where otherwise expressly indicated, all numerical quantities in this description are to be understood as modified by the word "about" and all geometric and spatial descriptors are to be understood as modified by the word "substantially" in describing the broadest scope of the technology. "About" when applied to numerical values indicates that the calculation or the measurement allows some slight imprecision in the value (with some approach to exactness in the value; approximately or reasonably close to the value; nearly). If, for some reason, the imprecision provided by "about" and/or "substantially" is not otherwise understood in the art with this ordinary meaning, then "about" and/or "substantially" as used herein indicates at least variations that can arise from ordinary methods of measuring or using such parameters.

All documents, including patents, patent applications, and scientific literature cited in this detailed description are incorporated herein by reference, unless otherwise expressly indicated. Where any conflict or ambiguity can exist between a document incorporated by reference and this detailed description, the present detailed description controls.

Although the open-ended term "comprising," as a synonym of non-restrictive terms such as including, containing, or having, is used herein to describe and claim embodiments of the present technology, embodiments can alternatively be described using more limiting terms such as "consisting of" or "consisting essentially of." Thus, for any given embodiment reciting materials, components, or process steps, the present technology also specifically includes embodiments consisting of, or consisting essentially of, such materials, components, or process steps excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, B and C specifically envisions embodiments consisting of, and consisting essentially of, A, B and C, excluding an element D that can be recited in the art, even though element D is not explicitly described as being excluded herein.

As referred to herein, disclosures of ranges are, unless specified otherwise, inclusive of endpoints and include all distinct values and further divided ranges within the entire range. Thus, for example, a range of "from A to B" or "from about A to about B" is inclusive of A and of B. Disclosure of values and ranges of values for specific parameters (such as amounts, weight percentages, etc.) are not exclusive of other values and ranges of values useful herein. It is envisioned that two or more specific exemplified values for a given parameter can define endpoints for a range of values that can be claimed for the parameter. For example, if Parameter X is exemplified herein to have value A and also exemplified to have value Z, it is envisioned that Parameter X can have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X can have other ranges of values including 1-9, 1-8, 1-3, 1-2, 2-10, 2-8, 2-3, 3-10, 3-9, and so on.

When an element or layer is referred to as being "on," "engaged to," "connected to," or "coupled to" another element or layer, it can be directly on, engaged, connected or coupled to the other element or layer, or intervening elements or layers can be present. In contrast, when an element is referred to as being "directly on," "directly engaged to," "directly connected to" or "directly coupled to" another element or layer, there can be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. can be used herein to describe various elements, components, regions, layers and/or sections, these elements, components, regions, layers and/or sections should not be limited by these terms. These terms can be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, can be used herein for ease of description to describe one element or feature's relationship to another element(s) or feature(s) as illustrated in the figures. Spatially relative terms can be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device can be otherwise oriented (rotated 90 degrees or at other orientations) and the spatially relative descriptors used herein interpreted accordingly.

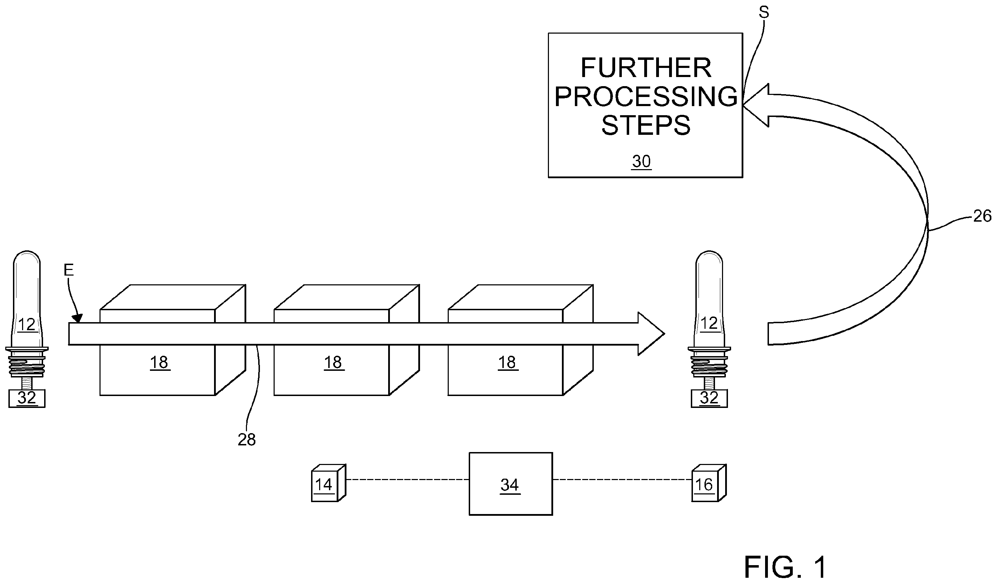

As shown in Fig. 1, the present technology is drawn to method of thermal imaging using a heating system 10 and method for optimizing preform temperature profiles and ways of using such systems, especially in blow molding a container (not shown) from a thermoplastic preform 12. The system 10, explained in more detail hereinbelow, generally includes a first camera 14, a second camera 16, and a heating means 18.

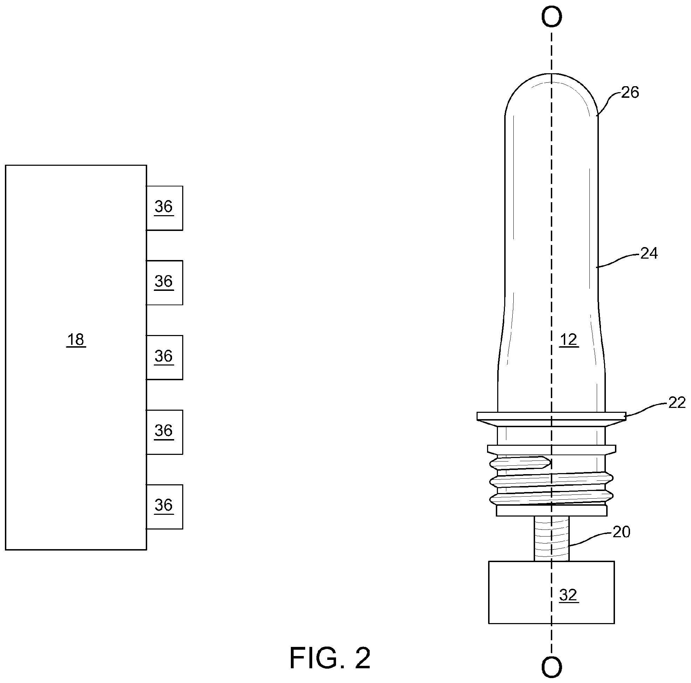

With respect to the preform 12, Fig. 2 shows an exemplary preform 12 having an elongate axis O having an overall shape resembling a test tube. The preform 12 has a neck 20, a shoulder 22, a body 24, and a rounded, closed bottom 26. Typically, the neck 20 and the shoulder 22 is each formed and in its definitive shape as it enters the system 10 and does not need to be heated or thermally imaged as contemplated herein. Accordingly, typically only the body 24 and the bottom 26 are heat treated and thermally imaged by the system 10, though the entire preform 12 may be heated, as desired. The tubular body 24 of the preform 12 is closed at an upper end by the hemispherical bottom 26 and at its lower end comprises the neck 20 which is already in the definitive shape of the neck 20 of the container, the annular shoulder 22 which extends radially outwards roughly delineates the unheated portion of the preform 12 from the heated portion thereof. The preform 12 may be formed of a polyester material, such as polyethylene terephthalate (PET) and other polyesters, polypropylene, acrylonitrile acid esters, vinyl chlorides, polyolefins, polyamides, and the like, as well as derivatives, blends, and copolymers thereof. As shown, the preform 12 has a shape well known to those skilled in the art similar to a test-tube with a generally cylindrical cross section and a length typically approximately fifty percent (50%) that of the resultant container height, or the preform 12 may have any shape, length, and formed from any material, as desired. As explained hereinabove, the heat treatment preformed in the system 10 is intended at preparing the preform 12 for conversion, by blow molding with a gas or a liquid, so as to shape each preform 12 into the container.

In the system 10, each preform 12 is provided at an entrance E of an infeed station by way of a mag-lev track, rail, or other transport mechanism (not shown). The preforms 12 are then individually placed onto a conveyor 28, which transports the preforms 12 through the system 10, as detailed hereinbelow, and ultimately to an exit S of the system 10 for further processing steps 30. The further processing steps 30 may include transporting the preform 12 for one of re-entry into the entrance E for additional heating, rejection and recycling, or to a blow mold loading station (not shown) for forming the preform 12 into the container.

Each preform 12 enters the system 10 (at ambient temperature) disposed on a spindle 24 (as shown in Fig. 2) which allows for the 360° rotation thereof as the preform 12 traverses therethrough. At the entry E, each preform 12 is inspected and measured by a first camera 14. The camera 14 is a visual-inspection camera but the camera 14 may be an infrared camera or any other camera capable of measuring the desired characteristics noted herein of each preform 12. For example, the camera 14 is adapted to inspect, measure, transmit, and/or collect data concerning the preform 12 including, but not limited to, a starting (often times ambient) temperature of the preform 12, the material from which the preform 12 is formed, the material state (i.e., amorphous v. crystalline) of the preform 12, any inclusions (i.e., foreign materials) in the preform 12, an image of the preform 12 with a desired resolution, and the physical dimensions (e.g., height, width, diameter) of the preform 12. The camera is in electronic communication with a computer 34, and/or a process controller (not shown), and/ or other data processor (not shown) capable of processing and/or tabulating the images and date from the first camera 14.

After inspection and measuring by the camera 14, each preform 12 is transported via the conveyor 28 through the system 10 and past a series of heating means 18. The heating means 18 may be an infrared oven, for example, or any suitable heating means as known by one of ordinary skill in the blow molding art. Direct and/or indirect (e.g., reflected) thermal energy can be applied by the heating means 18. Multidirectional application of thermal energy can be used as well as where preforms 12 themselves are moved, spun, or rotated about various thermal radiation sources in the various heating means 18. Any number of heating means 18 may be utilized, as desired, but, as shown in Fig. 1, the system 10 includes three (3) heating means 18. As best shown in Fig. 2, each heating means 18 comprises five (5) heating elements 36 to facilitate heating of each preform 12 at different heights thereof along the longitudinal axis O. It is understood that the number of heating means 18 and the heating elements 36 present in the heating means 18, or operation thereof during a given process, may vary based on the size or specifications of each preform 12, material properties of each preform 12, and the like. The heating means 18 are spaced longitudinally along the conveyor 28 through the system 10 so as to introduce into the preforms 12 a desired temperature profile that will allow for optimization of the distribution of the plastic material during the remaining steps in a pre-stretch and blow molding process. The temperature profile may vary or define a gradient along the longitudinal axis O of each preform 12. Alternatively, the temperature profile may be constant over the length of the preforms 12. Additionally, the temperature profile may vary across the thickness of the preforms 12 with, for example, the material on the exterior of the preform 12 being at a higher temperature than the material on the interior of the preform 12. The actual temperature profile will depend on the specific design of the preform 12, including its shape and material composition, material distribution, and the design of the resulting container to be formed. As each preform 12 passes the heating means 18, each preform 12 is rotated on its spindle 32 thus being heated by the heating means 18 until each preform 12 reaches a second camera 16.

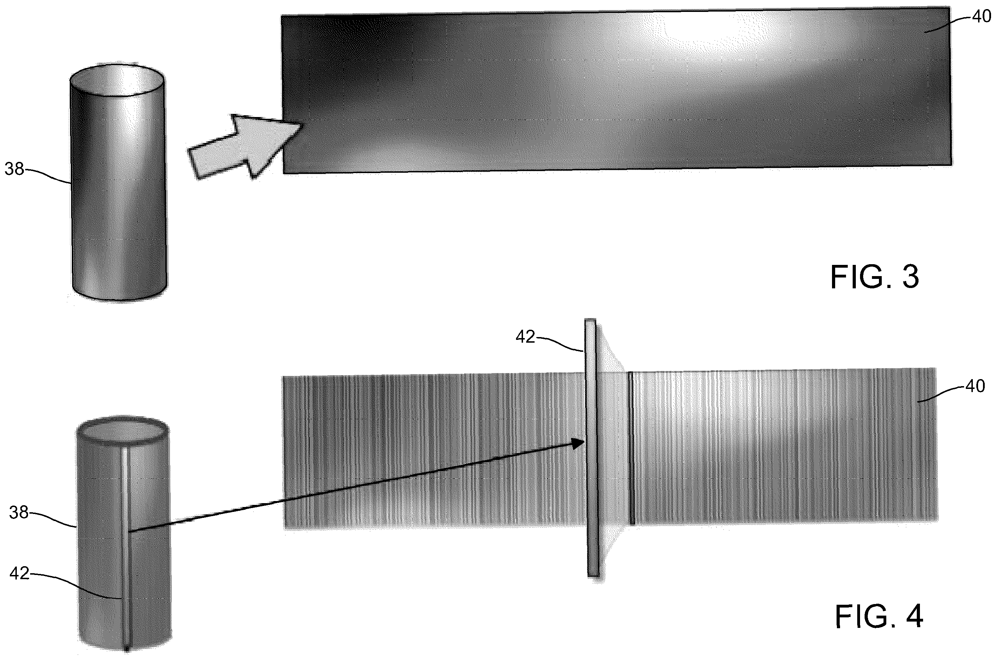

As shown in Fig. 1, the camera 16 is an infrared camera adapted to inspect and measure the temperature of each preform 12 along the longitudinal axis O thereof and around an entire circumference thereof. The camera 16 measures a temperature of the preform 12 along its axis O and circumference at a defined and desired number of data points and/or at a desired resolution (as constrained by the camera 16). For example, data points may correspond to a height of each of the heating elements 36 and/or portions of the preform 12 therebetween along each degree of the circumference of the preform 12 and/or areas therebetween. The camera 16 is in electronic communication with a computer 34 and/ or a process controller and/or other data processor (not shown) capable of processing and/or tabulating the thermal characteristics data measured by the camera 16. For example, the computer 34 converts the thermal characteristics data of the preform 12 into a three-dimensional thermal image 38 of each preform 12, as best shown in Fig. 3. The computer 34 may then convert the three-dimensional thermal image 38 into a two-dimensional thermal image 40 (also known as a heat map). Alternatively, the computer 34 may convert the thermal characteristics data directly into the two-dimensional thermal image 40. The image 40, when viewed left to right, is a representation of a temperature measurement of the preform 12 from about 0° to about 359° taken as the preform 12 rotates on the spindle 30. Thus, the temperature profile of the three-dimensional preform 12 may be viewed in two dimensions. Furthermore, the temperature profile of the preform 12 may be viewed as a whole or at desired discreet pixel or areas, for example, along a longitudinal area 42, as shown in Fig. 4. As an example and as best shown in Fig. 4, the three-dimensional thermal image 38 can be divided into a desired number of longitudinal areas such as, for example, three-hundred fifty-nine (359) longitudinal areas corresponding to each degree of the preform 12 as rotated about its axis O from about 0° to about 359°. In this way, a particular longitudinal area 42 of the three-dimensional thermal image 38 and of the preform 12 itself can be more easily and readily observed on the two-dimensional thermal image 40 without the requirement to access and/or rotate the three-dimensional thermal image 38.

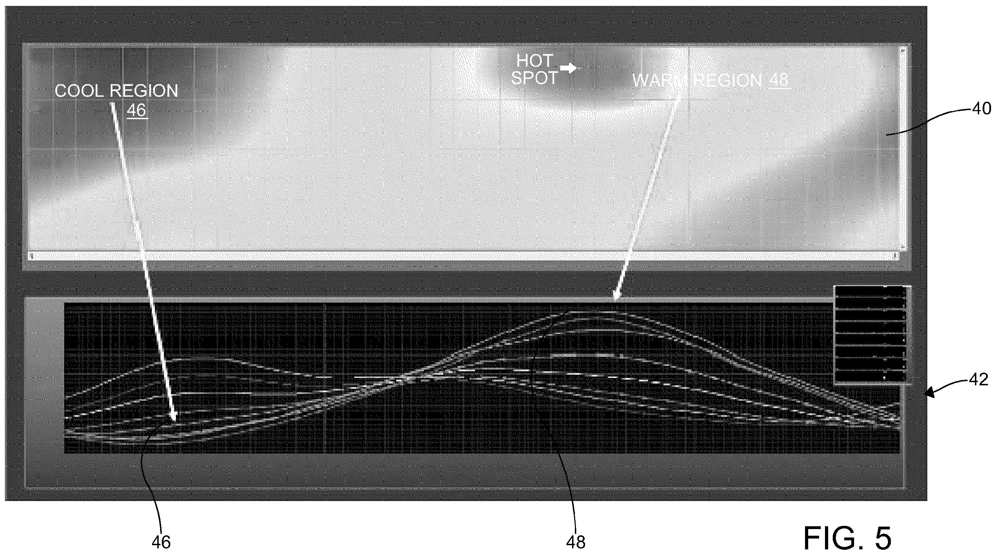

As noted above, the temperatures of the preform 12 are tabulated by the computer 34. The temperatures measured are then plotted against the position of the measurement on the preform 12, as shown in a graph 44 in Fig. 5. As shown on the graph 44, the temperature of the preform 12 at each temperature measurement taken by the camera 14 (x-axis) is plotted against the position of such measurement on the preform 12 (x-axis). In this way, the graph 44, a numerical/ graphical representation of the temperature measurements, can be readily compared and directly correlates to the two-dimensional thermal image 40, a color-based heat map.

By creating the two-dimensional thermal image 40, temperature measurements of each heated preform 12 may be readily and easily ascertained before the preform 12 is transferred to the blow molding station and molded into the final container. In some instances, the thermal images 38, 40, and/or the graph 44 may indicate that a preform 12 has "cool regions" 46 or "warm regions" 48. Such regions 48, 48 may result in blowouts during blow molding, thus requiring remedial action during the heating of the preform 12. Because the exact location of such regions 46, 48 can be pinpointed by observance and analysis of the thermal images 38, 40, and/or the graph 44, remedial action can be taken to ensure proper heating of the preform 12 to minimize blowouts during blow molding thereof into the container. The remedial action may include adjustment of one or more of process parameters and settings of the system 10, including adjustment of the heating means 16 or specific heating elements 36, to increase or decrease the temperature of any portion of the preform 12 (e.g., the regions 46, 48), as desired, so that subsequent preforms have a different and acceptable temperature profile to minimize blowouts during blow molding. Additional remedial actions include, for example, upwardly or downwardly adjusting the spin rate of the spindle 32 upon which each preform 12 is disposed, or increasing or decreasing the residence time of the preform 12 (or speed of the conveyor 28) within the system 10, and/or cooling airflow within the system 10 may be increased or decreased.

In use, the images and/or information obtained from the first camera 14 are processed by the computer 34 to determine the thermal treatment appropriate for each preform 12 is to receive from the heating means 18. For example, the first camera 14 may identify individual preforms formed from different materials or having different sizes corresponding to resulting containers having different volumes. Accordingly, each preform 12 may require its own specific thermal treatment from the heating means 18, and/or the first camera 14 may detect an unacceptable number of inclusions or other unacceptable issues with a particular preform and signal the system 10 via the computer 34 or the process controller to reject that preform and remove it for recycling or destruction. Once each preform 12 receives its thermal treatment from the heating means 18, data is gathered for each preform 12 by the second camera 16. The computer 34 compares the data for each preform 12 as received from the first camera 14 and to data received from the second camera 16 to ensure that the thermal treatment was appropriate and acceptable for the given specifications (e.g., dimensions and/or material) of the preforms 12.

The computer 34 or the process controller may cause adjustments to the system 10 to ensure subsequent preforms 12 of similar specification receive an appropriate thermal treatment by, for example, increasing or decreasing the intensity of the heating means 18, upwardly or downwardly adjusting the spin rate of the spindle 32 upon which each preform 12 is disposed, or increasing or decreasing the residence time of the preform 12 (or speed of the conveyor 28) within the system 10, and/or cooling airflow within the system 10 may be increased or decreased. The computer 34 and/or the process controller will make adjustments to the system 10, as necessary, based on a comparison of images from the cameras 14, 16 and/or data from the cameras 14, 16 with respect to each preform 12. By ensuring that the thermal treatment for each preform 12 is appropriate and acceptable prior to the preform 12 being subjected to a blow molding operation (i.e., the further processing steps 30), blowouts of the preform(s) 12 are minimized and cost savings may be realized.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments can be embodied in many different forms, and that neither should be construed to limit the scope of the disclosure. In some example embodiments, well-known processes, well-known device structures, and well-known technologies are not described in detail. Equivalent changes, modifications and variations of some embodiments, materials, compositions and methods can be made within the scope of the present technology, with substantially similar results.

### POSSIBLE ASPECTS OF THE INVENTION

1. A method for heating a preform, the method comprising the steps of:
   providing a plurality of preforms suitable for blow molding;
   inspecting each preform to identify at least a material from which the preform is formed;
   heating each preform;
   measuring the temperature of at least a portion of each preform along its longitudinal axis and around its circumference; and
   optimizing the heating step based on a comparison of the measuring step to the inspecting step to ensure each preform has been heated to an acceptable temperature to ensure the heating step for subsequent preforms is optimized for blow molding to militate against blowouts thereof.
2. The method of aspect 1, further comprising a step of compiling the measured temperatures of the at least a portion of each preform.
3. The method of aspect 2, further comprising a step of converting the compiled measured temperatures into a three-dimensional thermal image representing the measured temperatures of the at least a portion of the preform.
4. The method of aspect 3, wherein the compiled temperatures are converted into a two-dimensional thermal image representing the portion of the preform measured along its longitudinal axis and around its circumference in the converting step.
5. The method of aspect 4, wherein the two-dimensional thermal image is a heat map.
6. The method of aspect 4, wherein during the heating step the preform is caused to rotate at least 360° about its longitudinal axis.
7. The method of aspect 5, wherein the heat map represents measurements of the circumference of the preform from about 0° to about 359° of the at least a portion of the preform.
8. The method of aspect 2, further comprising a step of converting the compiled temperatures into a graphical image representing the temperatures of the least a portion of the preform against a position of the measurement.
9. The method of aspect 1, wherein the inspecting step is preformed by a first camera and the measuring step is preformed by a second camera.
10. The method of aspect 9, wherein the second camera is an infrared camera.
11. The method of aspect 9, wherein the first camera is a visual-inspection camera.
12. The method of aspect 11, wherein the first camera records and an image of the preform with a desired pixilation.
13. The method of aspect 1, wherein the plurality of preforms are not all formed from the same material.
14. The method of aspect 14, wherein each preform is heated based on the inspection step and in accordance with a desired heating profile according to the material from which each preform is formed.
15. The method of aspect 1, wherein at least one of a starting temperature of the preform, the material state thereof, a presence of inclusions therein, and the physical dimensions thereof are detected during the inspecting step.
16. A method for heating a preform, the method comprising the steps of:
   providing a plurality of preforms suitable for blow molding;
   inspecting each preform to identify at least a material from which the preform is formed;
   heating each preform;
   measuring the temperature of at least a portion of each preform along its longitudinal axis and around its circumference;
   comprising a step of compiling the measured temperatures of the at least a portion of each preform;
   converting the compiled measured temperatures into a three-dimensional thermal image representing the measured temperatures of the at least a portion of the preform; and
   optimizing the heating step based on a comparison of three-dimensional thermal image to the inspecting step to ensure each preform has been heated to an acceptable temperature to ensure the heating step for subsequent preforms is optimized for blow molding to militate against blowouts thereof.
17. The method of aspect 16, wherein the three-dimensional thermal image is converted into a two-dimensional thermal image representing the portion of the preform measured along its longitudinal axis and around its circumference in the converting step prior to the optimizing step.
18. The method of aspect 17, wherein the inspecting step is preformed by a first camera and the measuring step is preformed by a second camera.
19. A method for heating a preform, the method comprising the steps of:
   providing a plurality of preforms suitable for blow molding;
   inspecting each preform to identify at least a material from which the preform is formed;
   heating each preform;
   measuring the temperature of at least a portion of each preform along its longitudinal axis and around its circumference;
   comprising a step of compiling the measured temperatures of the at least a portion of each preform;
   converting the compiled measured temperatures into a three-dimensional thermal image representing the measured temperatures of the at least a portion of the preform;
   converting the three-dimensional thermal image into a two-dimensional thermal image representing the portion of the preform measured along its longitudinal axis and around its circumference; and
   optimizing the heating step based on a comparison of two-dimensional thermal image to the inspecting step to ensure each preform has been heated to an acceptable temperature to ensure the heating step for subsequent preforms is optimized for blow molding to militate against blowouts thereof.
20. The method of aspect 20, wherein each preform is heated based on the inspection step and in accordance with a desired heating profile according to the material from which each preform is formed.

## Claims

1. A method of optimizing a blow molding process, the method comprising the steps of:
providing a plurality of preforms (12);
heating each preform (12); and
measuring the temperature of at least a portion of each preform (12) along its longitudinal axis (O) and around its circumference;
the method **characterized by** the following steps:
determining whether each preform (12) is unacceptable for undergoing the blow molding process prior to transferring each preform to a blow molding station, wherein the determination of whether each preform is unacceptable for undergoing the blow molding process is based upon analysis of one or both of:
data collected during an inspection of each preform occurring before the heating of each preform, and/or
data collected during the measuring of the temperature of at least the portion of each preform; and
taking remedial action with respect to each preform determined to be unacceptable for undergoing the blow molding process.

2. The method of claim 1, wherein the remedial action includes at least one of rejecting a corresponding preform (12) for recycling or destruction, heating the corresponding preform again, and/or adjusting parameters of a heating system (10) used to perform the heating of the corresponding preform.

3. The method of claim 1, wherein the determination of whether each preform (12) is unacceptable for undergoing the blow molding process is based upon a comparison of the data collected during the measuring of the temperature of at least a portion of a corresponding preform to an acceptable temperature profile associated with the corresponding preform.

4. The method of claim 3, wherein the acceptable temperature profile associated with the corresponding preform (12) is determined based on at least one characteristic of the corresponding preform.

5. The method of claim 4, wherein the at least one characteristic of the corresponding preform (12) is detected during inspection of each preform occurring prior to the heating of each preform.

6. The method of claim 5, wherein inspection of each preform (12) includes collecting data via a first camera (14), wherein the first camera is one of a visual-inspection camera or an infrared camera.

7. The method of claim 6, wherein the measuring of the temperature of at least the portion of each preform (12) includes collecting data via a second camera (16), wherein the second camera is an infrared camera.

8. The method of claim 4, wherein the at least one characteristic of each preform (12) is one or more of: material type, material state, presence of inclusions, physical dimensions, and a starting temperature of each preform prior to the heating thereof.

9. The method of claim 3, wherein the data collected during the measuring of the temperature of at least the portion of the corresponding preform (12) is compiled and converted to a thermal image (38, 40) representing the measured temperatures of the at least the portion of the corresponding preform.

10. The method of claim 9, wherein the thermal image (38, 40) associated with the corresponding preform (12) is compared to the acceptable temperature profile associated with the corresponding preform in determining whether the corresponding preform is unacceptable for undergoing the blow molding process.

11. The method of claim 10, wherein it is determined that the corresponding preform (12) is unacceptable for undergoing the blow molding process in reaction to the thermal image associated with the corresponding preform having relatively cool regions (46) and/or relatively warm regions (48) in comparison to the acceptable temperature profile associated with the corresponding preform.

12. The method of claim 3, wherein the remedial action includes adjusting one or more parameters of a heating system (10) utilized in performing the heating step, the parameters including one or more of heating intensity, residence time, cooling airflow, or rotational speed of each preform (12).

13. The method of claim 12, wherein the parameters of the heating system (10) are adjusted to one of:
heat the corresponding preform (12) determined to be unacceptable for undergoing the blow molding process again, or
heat a subsequent preform (12) associated with the same acceptable temperature profile as the corresponding preform.

14. The method of claim 1, wherein the inspection of each preform (12) includes detecting a presence of inclusions within each preform, and wherein a corresponding preform is determined to be unacceptable for undergoing the blow molding process in reaction to the detection of an unacceptable number of inclusions within the corresponding preform.

15. The method of claim 14, wherein the remedial action includes rejecting the corresponding preform (12) for recycling or destruction in reaction to the determination that the unacceptable number of inclusions has been detected within the corresponding preform.
